(19) Europäisches Patentamt
European Patent Office
Office européen des brevets

(11) Veröffentlichungsnummer: **0 089 566**
**B1**

# (12) EUROPÄISCHE PATENTSCHRIFT

(45) Veröffentlichungstag der Patentschrift: **02.10.85**

(51) Int. Cl.⁴: **C 09 B 23/14,** C 09 B 23/06, C 09 B 23/10, D 06 P 1/42

(21) Anmeldenummer: **83102384.1**

(22) Anmeldetag: **11.03.83**

## (54) Verfahren zur Herstellung von kationischen Methinfarbstoffen.

(30) Priorität: **23.03.82 DE 3210596**

(43) Veröffentlichungstag der Anmeldung: **28.09.83 Patentblatt 83/39**

(45) Bekanntmachung des Hinweises auf die Patenterteilung: **02.10.85 Patentblatt 85/40**

(84) Benannte Vertragsstaaten: **BE CH DE FR GB IT LI**

(56) Entgegenhaltungen:
**FR - A - 2 359 881**
**US - A - 3 379 723**
**US - A - 3 514 453**
**US - A - 3 980 430**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Raue, Roderich, Dr., Berta-von-Suttner-Strasse 48, D-5090 Leverkusen 1 (DE)**
Erfinder: **Kühlthau, Hans-Peter, Dr., Paul-Klee-Strasse 48, D-5090 Leverkusen 1 (DE)**
Erfinder: **Lehment, Klaus-Friedrich, Dr., Theodor-Storm-Weg 6, D-5068 Odenthal (DE)**

**EP 0 089 566 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein Verfahren zur Herstellung kationischer Methinfarbstoffe der allgemeinen Formel

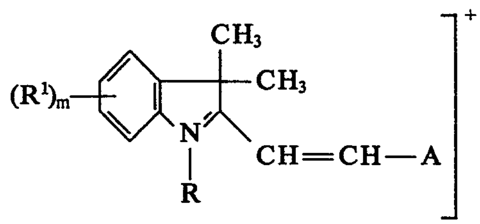

(I)

in welcher

R für einen gegebenenfalls durch Hydroxy, Alkoxy mit 1 bis 4 C-Atomen, Acyloxy, Halogen, Cyan, Carboxy, $C_1$- bis $C_4$-Carbalkoxy, Carbonamido oder Acetyl substituierten Alkylrest mit 1 bis 4 C-Atomen,

$R^1$ für Wasserstoff, Alkyl mit 1 bis 4 C-Atomen, Halogen, Alkoxy mit 1 bis 4 C-Atomen, Hydroxyalkoxy mit 2 bis 4 C-Atomen, einen gegebenenfalls durch Halogen, $C_1$- bis $C_4$-Alkyl oder $C_1$- bis $C_4$-Alkoxy substituierten Phenoxy-, Benzyloxy- oder Benzyl-Rest, Carboxyl, einen Carbonsäurealkylester mit 1 bis 4 C-Atomen, eine gegebenenfalls durch 1 oder 2 $C_1$- bis $C_4$-Alkylreste substituierte Carbonamidgruppe, eine gegebenenfalls durch 1 oder 2 $C_1$- bis $C_4$-Alkylreste substituierte Sulfonamidgruppe, Alkylsulfonyl mit 1 bis 4 C-Atomen, Phenylsulfonyl, eine Cyan-, Trifluormethyl-, Acetyl- oder Benzoylgruppe,

A für einen Rest der Formel

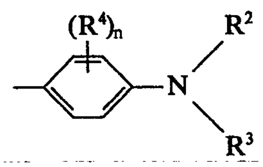

(II)

in welcher die Reste

$R^2$ und $R^3$ unabhängig voneinander für einen gegebenenfalls durch Hydroxy, $C_1$- bis $C_4$-Alkoxy, Halogen, Cyan, Phenyl, Carbalkoxy mit 1 bis 4 C-Atomen, Carbonamido, Acyloxy, Benzyloxy, Sulfonamido oder Acylamino substituierten Alkylrest mit 1 bis 4 C-Atomen stehen,

$R^2$ zusätzlich für einen gegebenenfalls durch Halogen, $C_1$- bis $C_4$-Alkyl oder $C_1$- bis $C_4$-Alkoxy substituierten Phenyl- oder Benzylrest steht oder mit dem benachbarten C-Atom des Benzolringes einen teilhydrierten N- und gegebenenfalls O-haltigen 5- oder 6-Ring bilden kann,

$R^4$ Wasserstoff, einen Alkylrest mit 1 bis 4 C-Atomen, einen Alkoxyrest mit 1 bis 4 C-Atomen oder Halogen bedeutet,

oder einen Rest der Formel

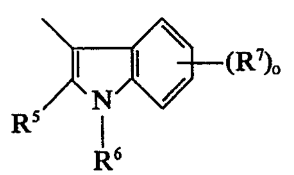

(III)

in welcher

$R^5$ für einen Alkylrest mit 1 bis 4 C-Atomen, einen gegebenenfalls durch Halogen, $C_1$- bis $C_4$-Alkyl, oder $C_1$- bis $C_4$-Alkoxy substituierten Phenylrest oder einen Carbalkoxyrest mit 1 bis 4 C-Atomen,

$R^6$ für Wasserstoff, einen gegebenenfalls durch Hydroxy, Halogen, Alkoxy mit 1 bis 4 C-Atomen, Cyan oder Acyloxy substituierten Alkylrest mit 1 bis 4 C-Atomen,

$R^7$ für Wasserstoff, Halogen, $C_1$- bis $C_4$-Alkyl, $C_1$- bis $C_4$-Alkoxy, Carbalkoxy mit 1 bis 4 C-Atomen, $C_1$- bis $C_4$-Alkylsulfonyl, Phenylsulfonyl, Acetyl oder Benzoyl stehen,

oder einen Rest der Formel

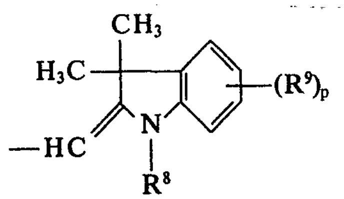

(IV)

stehen, in welcher

$R^8$ bzw. $R^9$ unabhängig voneinander die gleiche Bedeutung wie R bzw. $R^1$ in Formel (I) haben,
$X^-$ den Rest einer anorganischen Säure und
m, n, o, und p unabhängig voneinander 1 bis 4 bedeuten,

durch Kondensation einer Verbindung der Formel

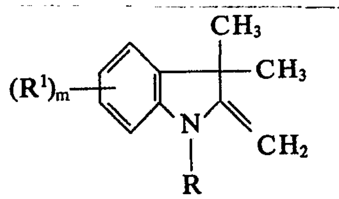

(V)

in welcher

R, $R^1$ und m die gleiche Bedeutung wie in Formel (I) haben,

mit einer Verbindung der Formel

A—CHO (VI)

in welcher

A die in Formel (I) angegebene Bedeutung besitzt,

und Säuren, dadurch gekennzeichnet, daß man die Kondensation mit 1 bis 5 Äquivalenten einer anorganischen Säure in Gegenwart von 0—30 Gew.-% eines organischen Lösungsmittels und von 0—15 Gew.-% Wasser (beide Gewichtsangaben bezogen auf das Gesamtgewicht der Komponenten V und VI) durchführt.

Eine bevorzugte Gruppe von Farbstoffen, die nach dem neuen Verfahren darstellbar ist, entspricht der allgemeinen Formel

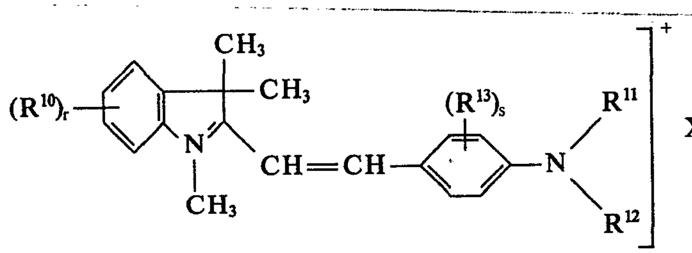

(VII)

in welcher

$R^{10}$ für Wasserstoff, Chlor, Methyl, Methoxy, Ethoxy oder Carbomethoxy,
$R^{11}$ und $R^{12}$ unabhängig voneinander für einen gegebenenfalls durch Hydroxy, Methoxy, Ethoxy, Chlor, Cyan, Phenyl oder Acyloxy substituierten Alkylrest mit 1 bis 4 C-Atomen stehen und
$R^{11}$ zusätzlich einen gegebenenfalls durch Chlor, Methyl oder Methoxy substituierten Phenylrest bezeichnet oder mit dem benachbarten C-Atom des Benzolringes einen teilhydrierten N- und gegebenenfalls O-haltigen 5- oder 6-Ring bilden kann,
$R^{13}$ Wasserstoff, Methyl, Chlor, Methoxy oder Ethoxy,
r und s 1 oder 2 bedeuten, und
$X^-$ die gleiche Bedeutung wie in Formel (I) hat.

Insbesondere werden äquimolare Mengen der Verbindungen (V) und (VI) umgesetzt.

In den vorstehenden Formeln steht Halogen vorzugsweise für Fluor, Chlor oder Brom.

Unter Acyl wird insbesondere Acetyl, Propionyl, Benzoyl oder Carbamoyl verstanden.

Die Reste $R^2$ und $R^{11}$ können wenn sie mit dem zur o-Stellung des Stickstoffatoms stehenden Kohlenstoffatom des Benzolringes ringgeschlossen sind, zusammen mit dem Benzolring und dem Stickstoffatom z. B. einen gegebenenfalls durch $C_1-C_4$-Alkyl substituierten Indolin-, Tetrahydrochinolin-, Phenomorpholin- oder Tetrahydrochinoxalin-Ring bilden.

Die Reaktion wird in einem Festphasenreaktor mit rotierenden Einbauten durchgeführt.

Besonders geeignet sind Reaktionsschnecken, Knetapparaturen, Schaufeltrockner oder ein Allphasen-Reaktor, der z. B. in »Chemische Rundschau« 26 (1973), Seite 7 beschrieben wird.

Der Vorteil des neuen Verfahrens besteht darin, daß man, ohne eine wäßrige Phase zu durchlaufen, aus der der Farbstoff durch Aussalzen, Abfiltrieren und Trocknen isoliert werden muß, unmittelbar zum verkaufsfertigen Farbstoff gelangt. Bei dem neuen Verfahren fällt daher kein Abwasser an, und das arbeits- und energieaufwendige Trocknen des aus der Lösung isolierten Farbstoffes entfällt.

Verwendet man als Reaktionsgefäß einen Schaufeltrockner, so kann man unmittelbar zu verkaufsfertigen Farbstoffeinstellungen gelangen, indem man das üblicherweise zugesetzte Stellmittel, wie Natriumsulfat, Kochsalz oder Dextrin vor, während oder nach der Reaktion zusetzt. Der Zusatz anorganischer Salze, insbesondere Natriumsulfat, bereits zu Beginn der Reaktion ist von Vorteil, da hierdurch Krustenbildung an der Reaktorwand verhindert wird.

Ein weiterer überraschender Vorteil besteht darin, daß die Reaktion unter den erfindungsgemäßen Bedingungen nahezu quantitativ verläuft, so daß die Farbstoffe ohne weiteres Reinigungsverfahren in überraschend hoher Reinheit erhalten werden.

Die Herstellung von kationischen Methinfarbstoffen aus 2-Methylen-indolinen in Gegenwart von Säuren und gegebenenfalls in Mischung mit Wasser und/oder organischen Lösungsmitteln ist bekannt. Dabei dienen die Säuren oder ihre Mischungen als Lösungsmittel und sind darum in größeren Mengen vorhanden. Die Farbstoffe müssen wie vorstehend beschrieben aus dem Reaktionsmedium isoliert werden. Beispielsweise ist die Herstellung von N-Aralkyl-indoleninium-Farbstoffen in Gegenwart von Phosphorsäure und Alkoholen aus der US-A-3 514 453 bekannt. Die Herstellung eines N-Methyl-indoleninium-Farbstoffs in Gegenwart von Eisessig ist aus der US-A-3 379 723 bekannt, und in der FR-A-2 359 881 wird die Herstellung von Indoleninium-Farbstoffen durch Kondensation in salzsaurer alkoholischer Lösung beschrieben.

Für das Verfahren geeignete Zwischenprodukte der Formeln (V) und (VI) finden sich in vielen Patentschriften, u. a. seien genannt:

DE-PS
614 325, 615 130, 711 665, 721 020, 730 336, 742 039, 744 019, 891 120, 1 070 316, 1 099 670,

DE-AS
1 044 022, 1 049 994, 1 158 646, 1 569 734, 2 031 202, 2 040 872, 2 234 468,

DE-OS
1 929 417, 2 040 652, 2 040 653, 2 064 881, 2 064 882, 2 101 223, 2 130 790, 2 135 834, 2 200 027, 2 202 300, 2 243 627, 2 726 437,

US-PS
2 815 338, 3 394 130, 3 865 837, 3 888 850,

JA-PS
3 217-69,13 748-66, 19 951-65, 49 14 525, 49 72 477, 49 74 217, 50 05 683, 73 12 460, 73 13 752, 74 04 531, 76 35 405,

FR-PS
1 261 976,

BE-PS
734 765.

Besonders geeignete anorganische Säuren sind beispielsweise Schwefelsäure, Orthophosphorsäure, Pyrophosphorsäure, Polyphosphorsäure, Amidosulfonsäure sowie die sauren Salze mehrbasischer Säuren wie Natriumbisulfat, Kaliumbisulfat und primäres Natriumphosphat.

Außerdem sind Salzsäure, Bromwasserstoffsäure und Salpetersäure geeignet.

Besonders bevorzugte Säuren sind die verschiedenen Phosphorsäuren, so daß $X^-$ insbesondere für den Rest dieser Säuren steht.

Die Umsetzung kann in Gegenwart eine organischen Lösungsmittels vorgenommen werden, das während der Reaktion oder nach beendeter Umsetzung aus dem Reaktionsapparat wieder abdestilliert wird.

Als organische Lösungsmittel kommen in Frage:

Toluol, Xylol, Chlorbenzol, Dichlorbenzol, Aceton, Tetrahydrofuran, Dioxan und Dimethylglykol.

Der Vorteil des neuen Verfahrens besteht aber gerade darin, daß in den meisten Fällen auf die Anwendung eines Lösungsmittels verzichtet werden kann.

Vorteilhaft liegt der Gewichtsanteil des Wassers nicht über 5% der Summe der Komponenten V und VI.

Die Reaktion wird bei Temperaturen zwischen 40 und 120°C durchgeführt, bevorzugt ist der Temperaturbereich von 60—110°C.

Die erfindungsgemäß hergestellten Farbstoffsalze sind geeignet zum Färben von tannierter Baumwolle, sauer modifizierten Polyamid- und Polyesterfasern, insbesondere aber zum Färben von Fasermaterialien aus Polyacrylnitril. Weiter sind sie geeignet zum Färben von holzschliffhaltigem Papier, von Leder sowie zur Herstellung von Kugelschreiberpasten, Tinten und Stempelfarben.

## Beispiel 1

In einem Laboratoriumschaufeltrockner von ca. 3 l Rauminhalt werden 875 g 1,3,3-Trimethyl-2-methylen-indolin mit 873 g 4-Diethylamino-benzaldehyd homogen verrührt. Man tropft dann 494 g konz. Schwefelsäure ein. Die Schmelze wird bei 95—100°C nachgerührt. Sie kristallisiert nach etwa 30 min unter Temperaturanstieg auf 107°C. Die Apparatur wird noch 2 h bei 100°C weiterbetrieben. Man erhält so 2242 g des Farbstoffes der Formel

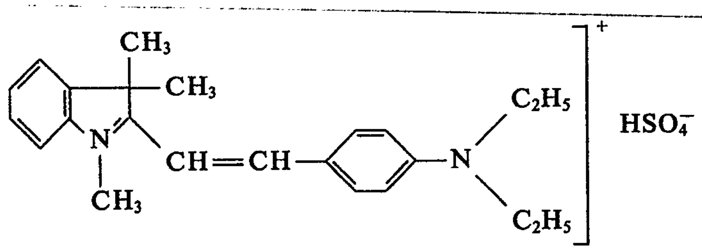

als feingemahlenes Pulver, welches Polyacrylnitril in einem stark blaustichigen Rot anfärbt (C. I. Hue Indication Chart Nr. 10).

Verwendet man anstelle von 1,3,3-Trimethyl-2-methylen-indolin die äquimolekulare Menge

1,3,3,5-Tetramethyl-2-methylen-indolin, 1,3,3-Trimethyl-5-chlor-2-methylen-indolin,
1,3,3-Trimethyl-5-methoxy-2-methylen-indolin, 1,3,3-Trimethyl-5,7-dichlor-2-methylen-indolin
oder 1,3,3-Trimethyl-5-chlor-7-methoxy-2-methylen-indolin

und verfährt sonst in gleicher Weise, so erhält man die entsprechenden Farbstoffe in Form ihrer Bisulfatsalze, die Polyacrylnitrilmaterialien in brillanten Rottönen anfärben.

## Beispiel 2

In einem Laboratoriumsschaufeltrockner von ca. 3 l Rauminhalt, der mit Schlagstangen ausgerüstet ist, werden 346 g 1,3,3-Trimethyl-2-methylen-indolin und 298 g 4-Dimethylamino-benzaldehyd bei Raumtemperatur vermischt. Dann läßt man 200 g konz. Schwefelsäure eintropfen, wobei sich die Schmelze auf 104°C erhitzt. Sie kristallisiert nach etwa 4 min Nachrühren und wird dann 1 h bei 100°C im Schaufeltrockner zu einem feinen Pulver vermahlen, welches den Farbstoff der Formel

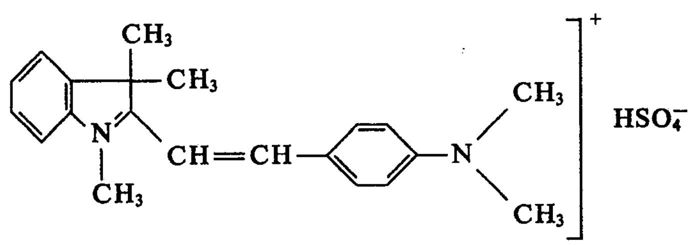

darstellt und Polyacrylnitril rot färbt (C. I. Hue Indication Chart Nr. 9).

## Beispiel 3

Man mischt 298 g 4-Dimethylamino-benzaldehyd mit 415 g 1,3,3-Trimethyl-5-chlor-2-methylen-indolin bei Raumtemperatur in einem Laborschaufeltrockner und läßt dann 200 g konz. Schwefelsäure zutropfen. Dabei steigt die Temperatur der Schmelze auf 70°C und erreicht nach weiteren 5 min 106°C,

wobei die Schmelze kristallisiert. Sie wird 2,5 h bei 95°C vermahlen. Der erhaltene Farbstoff hat die Formel:

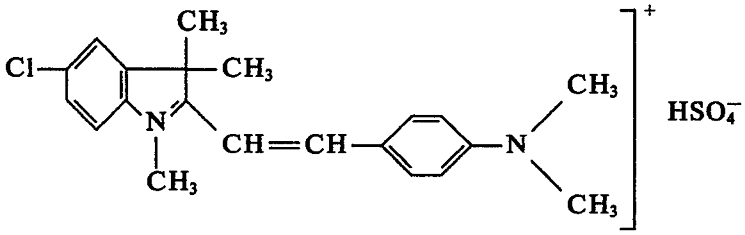

Er färbt Polyacrylnitril in einem rotstichigen Violett (C. I. Hue Ind. Chart Nr. 10).

Beispiel 4

In einem Laborschaufeltrockner mischt man 415 g 1,3,3-Trimethyl-5-chlor-2-methylen-indolin mit 354 g 4-Diethylamino-benzaldehyd. Anschließend werden 200 g konz. Schwefelsäure eingetropft. Die Temperatur der Schmelze steigt auf 67°C. Man erwärmt das Gemisch auf 95°C. Nach 5 min kristallisiert der Farbstoff unter Temperaturanstieg auf 106°C. Man betreibt den Schaufeltrockner noch 4 h bei 95°C, wobei der Farbstoff der Formel

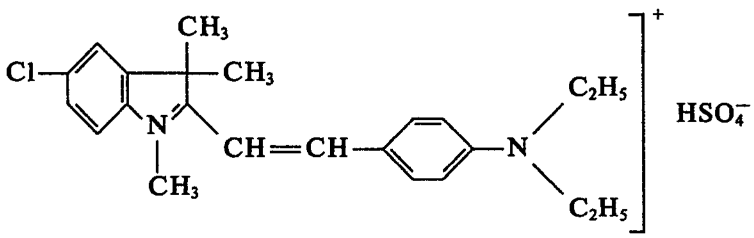

als feingemahlenes Pulver, welches Polyacrylnitril violett anfärbt (C. I. Hue Indication Chart Nr. 11) erhalten wird.

Beispiel 5

1120 g 4-(N-Ethyl-N,β-chlorethyl-amino)-2-methyl-benzaldehyd, 875 g 1,3,3-Trimethyl-2-methylen-indolin und 500 g Toluol werden bei Raumtemperatur in einem Laborschaufeltrockner verrührt. Dann tropft man 480 g konz. Schwefelsäure ein, wobei sich die Mischung auf 74°C erwärmt. Während des Nachrührens bei 70°C schmilzt die Masse und kristallisiert nach insgesamt 3 h. Man vermahlt den Farbstoff noch 6 h bei 70°C und destilliert dabei das Toluol unter vermindertem Druck ab. Das erhaltene Pulver stellt den Farbstoff der Formel

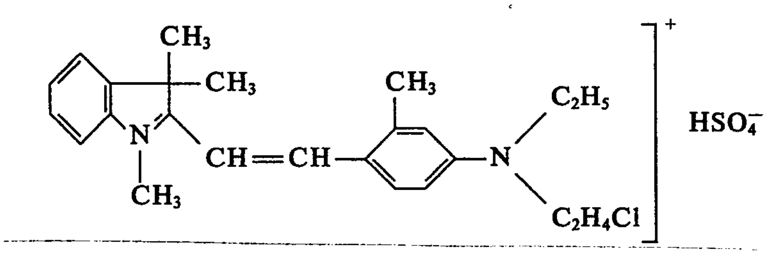

dar und färbt Polyacrylnitril blaustichig rot (C. I. Hue Indication Chart Nr. 11).

Beispiel 6

440 g 4-(N-Methyl-N,β-chlorethylamino)-benzaldehyd und 394 g 1,3,3-Trimethyl-2-methylen-indolin werden bei 50°C in einem Schaufeltrockner gemischt. Dann läßt man 462 g 85%ige Orthophosphorsäure einlaufen und erwärmt anschließend die Heizflüssigkeit des Reaktors auf 100°C. Ist diese Temperatur erreicht, beginnt der Farbstoff zu kristallisieren. Nach 10 min Rühren destilliert man unter vermindertem Druck das enthaltene Wasser ab und vermahlt dann das Produkt 6 h lang bei 100°C zu

feinem Pulver. Es enthält die Farbstoffe der Formeln

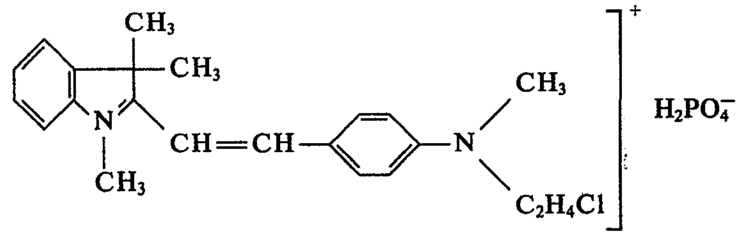

und

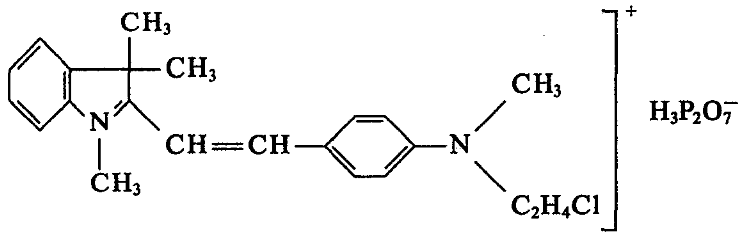

und färbt Polyacrylnitril blaustichig rot (C. I. Hue Indication Chart Nr. 50).

Wenn man wie vorstehend verfährt, jedoch der Mischung vor der Phosphorsäurezugabe 400 g wasserfreies Natriumsulfat zusetzt, löst sich die kristallisierende Schmelze beim Mahlen leichter von der Reaktorwand ab. Die Kondensation verläuft ebenso gut.

Anstelle von 400 g wasserfreiem Natriumsulfat kann man auch 80 g eines Oleylpolyglykolethers verwenden, um ein leichteres Abschlagen der kristallisierenden Schmelze von der Reaktorwand zu erreichen.

Beispiel 7

875 g 1,3,3-Trimethyl-2-methylen-indolin und 987 g 4-(N-Methyl-N,β-chlorethyl-amino)-benzaldehyd werden in einem Schaufeltrockner bei 50°C gemischt und dann die Mischung aus 345 g 85%iger Orthophosphorsäure und 492 g Polyphosphorsäure, die 76%ig an $P_2O_5$ ist, zugesetzt. Gleichzeitig erhitzt man das Heizbad auf 95°C. Bereits 2 min nach Zugabe der Säure kristallisiert ein Gemisch verschiedener Phosphate des in Beispiel 6 angeführten Farbstoffes. Er wird 1 h bei 95°C zu einem feinen Pulver vermahlen und ist ausgezeichnet zum Färben von sauer modifizierten Synthesefasern in blaustichig roten Tönen (C. I. Hue Indication Chart Nr. 50) geeignet.

Beispiel 8

376 g 4-(N-Methyl-N,β-cyanethylamino)-benzaldehyd und 346 g 1,3,3-Trimethyl-2-methylen-indolin werden in einem Laborschaufeltrockner bei 30°C vermischt und dann mit einer Mischung aus 138 g 85%iger Orthophosphorsäure und 197 g Polyphosphorsäure (76% $P_2O_5$) versetzt. Dabei steigt die Temperatur der Schmelze auf 95°C. Nach 15 min Nachrühren kristallisiert der Farbstoff. Er wird 4 h im Schaufeltrockner zu einem feinen Pulver vermahlen, welches aus einem Gemisch von Ortho-, Pyro- und Polyphosphaten des Farbstoffes der Formel

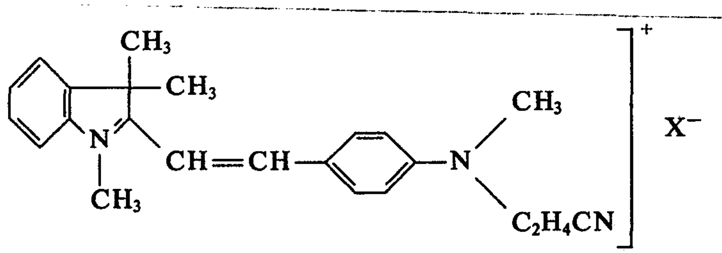

besteht, wobei $X^-$ das Gemisch von Phosphatanionen wechselnder Zusammensetzung bedeutet. Das Farbstoffpulver ist ausgezeichnet löslich und färbt Polyacrylnitril gelbstichig rot (C. I. Hue Indication Chart Nr. 49). Der Farbstoff enthält 0,1 Gew.-% der Aldehyd-Komponente und 0,3 Gew.-% der Indolin-Komponente.

Beispiel 9

Man erwärmt 354 g 4-(N,N-Diethyl-amino)-benzaldehyd und 364 g 1,3,3-Trimethyl-2-methylen-indolin in einem Schaufeltrockner auf 50° C und läßt dann die Mischung aus 138 g 85%iger Orthophosphorsäure und 196,8 g Polyphosphorsäure (76%ig an $P_2O_5$) einlaufen. Gleichzeitig erhitzt man das Heizbad auf 90—100° C. Die zunächst dünnflüssige Mischung wird innerhalb von wenigen Minuten zäher und kristallisiert nach 10 min unter Temperaturanstieg auf 115° C. Der Farbstoff wird durch 5stündiges Mahlen im Schaufeltrockner bei 95° C pulverisiert. Er entspricht der Formel

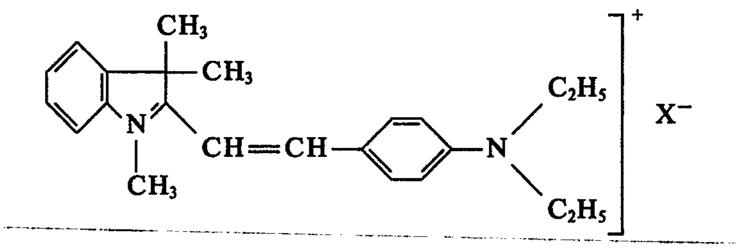

wobei X⁻ das Gemisch wechselnder Zusammensetzung aus Ortho- und Pyrophosphationen bedeutet. Der Farbstoff färbt sauer modifizierte Polyesterfasern blaustichig rot (C. I. Hue Indication Chart Nr. 10).

Beispiel 10

875 g 1,3,3-Trimethyl-2-methylen-indolin und 745 g 4-Dimethylamino-benzaldehyd werden in einem Laborschaufeltrockner bei 50° C verrührt. Dann läßt man eine Mischung aus 345 g 85%iger Orthophosphorsäure und 492 g Polyphosphorsäure (76% $P_2O_5$) einlaufen, wobei die Temperatur der Schmelze auf 107° C ansteigt. Kurz danach kristallisiert der Farbstoff. Er wird noch 2 h bei 95° C zu einem feinen Pulver vermahlen. Das Farbstoffpulver entspricht der Formel

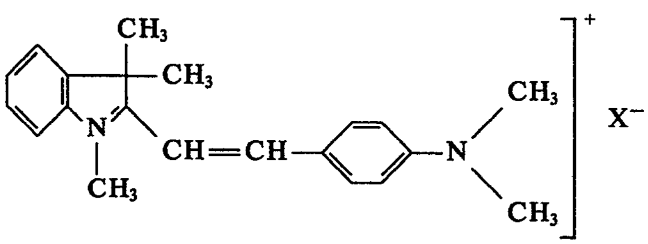

worin X⁻ eine Mischung aus Ortho-, Pyro- und Polyphosphatanionen wechselnder Zusammensetzung bedeutet. Er ist sehr leicht wasserlöslich und färbt Polyacrylnitril rot (C. I. Hue Indication Chart Nr. 9).

Beispiel 11

Arbeitet man wie in Beispiel 6, setzt jedoch statt 85%iger Orthophosphorsäure eine Mischung aus 177 g 85%iger Orthophosphorsäure und 216 g Polyphosphorsäure ein, so erhält man ein Farbstoffpulver mit den gleichen Eigenschaften wie in Beispiel 6.

Beispiel 12

Arbeitet man wie in Beispiel 6, setzt jedoch statt 85%iger Orthophosphorsäure 392 g 100%ige Orthophosphorsäure ein, so erhält man ein Farbstoffpulver mit den gleichen Eigenschaften wie in Beispiel 6.

Beispiel 13

875 g 1,3,3-Trimethyl-2-methylen-indolin und 987 g 4-(N-Methyl-N,β-chlorethyl-amino)-benzaldehyd werden bei Raumtemperatur in einem Laborschaufeltrockner vermischt. Anschließend tropft man unter Rühren 480 g konz. Schwefelsäure ein und rührt dann bei 90—95° C nach. Die Schmelze kristallisiert nach 1 h. Sie wird durch 1stündiges Nachrühren zu einem feinen Pulver vermahlen und stellt den

Farbstoff der Formel

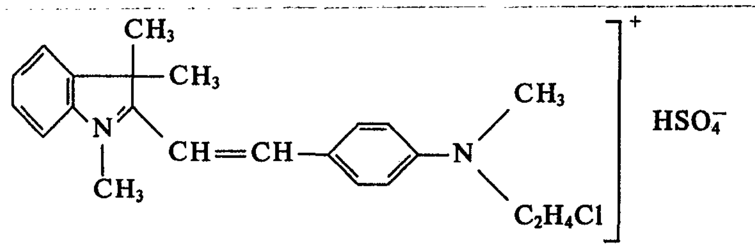

dar, der Polyacrylnitril blaustichig rot färbt (C. I. Hue Indication Chart Nr. 50).

Beispiel 14

In einem Laborschaufeltrockner werden 376 g 4-(N-Methyl-N,β-cyanethyl-amino)-benzaldehyd und 346 g 1,3,3-Trimethyl-2-methylen-indolin bei Raumtemperatur verrührt. Dann tropft man 200 g konz. Schwefelsäure ein, wobei die Temperatur der Schmelze auf 103° C steigt. Nach 1,5 h Nachrühren bei 95° C kristallisiert der Farbstoff. Man vermahlt in ca. 4 h bei 95° C zu einem festen Pulver. Er entspricht der Formel

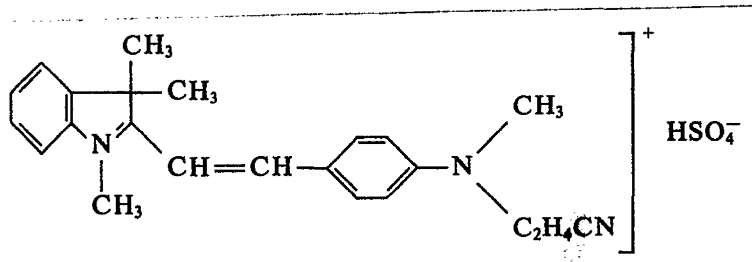

und färbt Polyacrylnitril gelbstichig rot (C. I. Hue Indication Chart Nr. 49).

Beispiel 15

In einem Laborschaufeltrockner mischt man 354 g 4-Diethylamino-benzaldehyd und 350 g 1,3,3-Trimethyl-2-methylen-indolin. Zu der Mischung, die eine Temperatur von 15° C hat, läßt man 210 g reine Salzsäure unter gutem Rühren zulaufen. Die erhaltene Schmelze erwärmt sich dabei auf 55° C. Nach 10 min Rühren legt man das Vakuum einer Wasserstrahlpumpe an und destilliert unter Erhitzen auf 80° C das Wasser ab. Anschließend mahlt man bei 65° C 10 h unter Vakuum. Das erhaltene Pulver stellt den Farbstoff der Formel

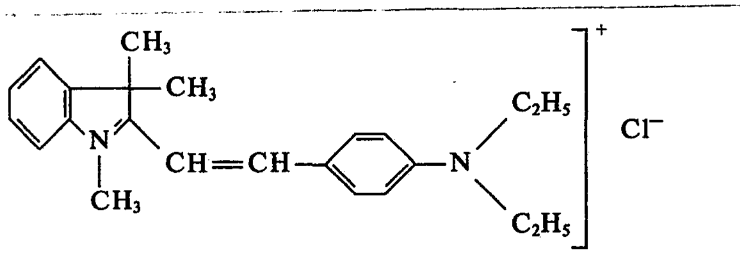

dar.

Beispiel 16

Zu einer Mischung aus 9,1 g 4-Diethylamino-benzaldehyd und 9 g 1,3,3-Trimethyl-2-methylen-indolin tropft man unter Rühren 5 g 65,3%ige Salpetersäure. Man rührt 1 h bei 85° C, legt dann Vakuum an und destilliert bei 85° C das Wasser ab. Dabei kristallisiert die Masse durch. Die Kondensation ist nach 3 h

Rühren bei 85° C quantitativ. Die Masse stellt den kristallinen Farbstoff der Formel

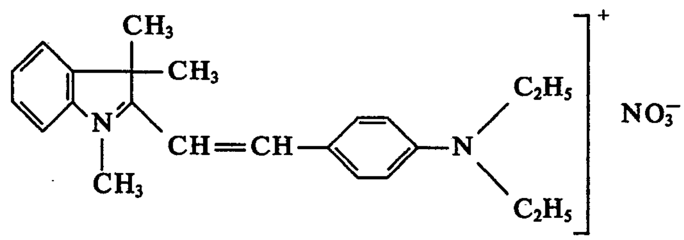

dar. Er läßt sich leicht zu einem feinen Pulver mahlen und ist gut zum Färben sauer modifizierter Synthesefasern in einem stark blaustichigen Rot geeignet(C. I. Hue Indication Chart Nr. 10).

Beispiel 17

Man verrührt in einem Laborschaufeltrockner bei 40° C 376 g 4-(N-Methyl-N,β-cyanethylamino)-benzaldehyd und 350 g 1,3,3-Trimethyl-2-methylen-indolin. Dann läßt man unter Rühren 210 g konz. Salzsäure einlaufen. Dabei steigt die Temperatur der Schmelze auf 56° C. Man rührt 10 min nach, erwärmt auf 80° C und destilliert dann im Vakuum der Wasserstrahlpumpe das Wasser ab. Dann wird 2 h bei 80° C und anschließend über Nacht bei 65° C im Vakuum gemahlen. Man erhält den Farbstoff der Formel

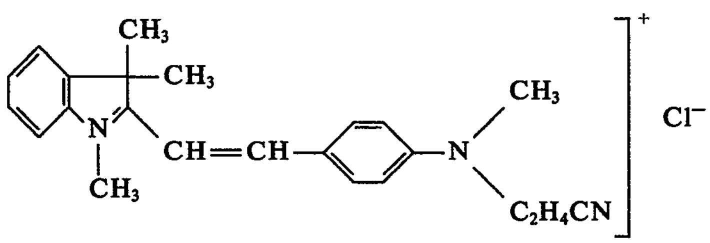

als feines Pulver.

Beispiel 18

In einem Laborschaufeltrockner werden bei 40° C 451 g 4-(N-Ethyl-N,β-chlorethylamino)-2-methylbenzaldehyd und 350 g 1,3,3-Trimethyl-2-methylen-indolin gemischt. Dann läßt man 210 g konz. Salzsäure einlaufen, erwärmt auf 80° C und destilliert dann im Vakuum der Wasserstrahlpumpe das Wasser ab. Man mahlt 4 h bei 80° C im Vakuum und dann bei 65° C über Nacht. Man erhält ein feines Pulver, welches den Farbstoff der Formel

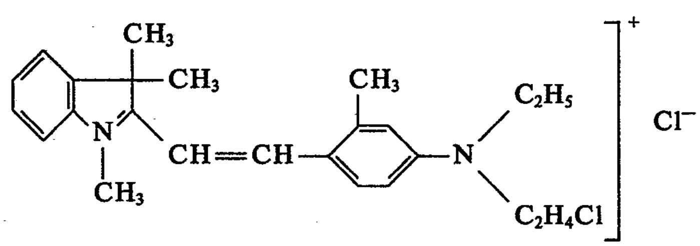

darstellt und Polyacrylnitril in stark blaustichig rotem Ton anfärbt (C. I. Hue Indication Chart Nr. 11).

Beispiel 19

Man vermischt in einem Laborschaufeltrockner 395 g 4-(N-Methyl-N,β-chlorethyl-amino)-benzaldehyd und 346 g 1,3,3-Trimethyl-2-methylen-indolin bei 40° C und läßt dann 210 g konz. Salzsäure zulaufen. Dann wird die Schmelze auf 80° C erhitzt und unter Rühren im Vakuum der Wasserstrahlpumpe das Wasser abdestilliert. Anschließend mahlt man noch 3 h bei 80° C unter Vakuum und erhält ein

feines Pulver des Farbstoffes der Formel

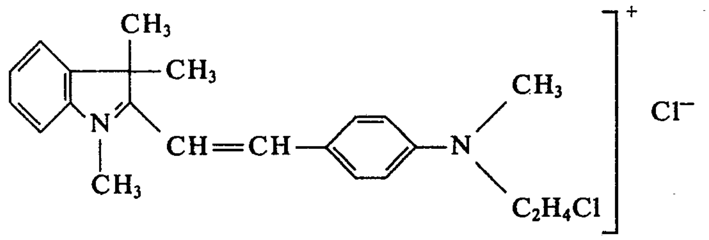

das Polyacrylnitril rosa färbt (C. I. Hue Indication Chart Nr. 50).

Beispiel 20

In einem Laborschaufeltrockner vermahlt man 531 g 4-Diethylamino-benzaldehyd, 526,5 g 1,3,3-Trimethyl-2-methylen-indolin und 600 g wasserfreies Natriumsulfat. Dann werden 900 g $NaHSO_4 \cdot H_2O$ eingetragen. Man mischt 1 h bei 50° C, erhitzt auf 100° C und legt das Vakuum einer Wasserstrahlpumpe an. Nach Mahlen über Nacht erhält man ein feines Pulvergemisch aus Natriumsulfat und dem Farbstoff der Formel

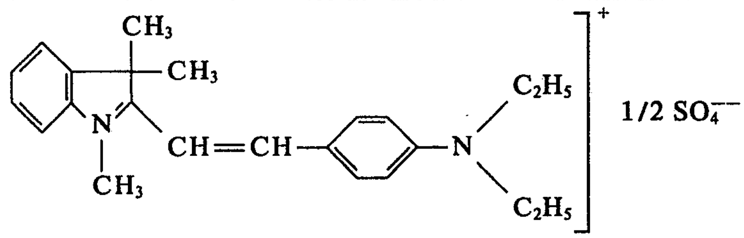

welches als Färbepräparation gut zum Färben von sauer modifizierten Synthesefasern in stark blaustichig roten Tönen geeignet ist (C. I. Hue Indication Chart Nr. 10).

Beispiel 21

597 g 1,3,3-Trimethyl-2-methylen-indolin, 694 g 4-(N-Methyl-N,β-cyanethylamino)-benzaldehyd und 1 kg $Na_2SO_4$ (wasserfrei) werden in einem Schaufeltrockner gemischt und dann mit 1020 g $NaHSO_4 \cdot H_2O$ versetzt. Man rührt 1 h bei 50° C und dann im Vakuum der Wasserstrahlpumpe bei 100° C über Nacht. Man erhält ein feines Pulver, welches ein Gemisch aus Natriumsulfat und dem Farbstoff der Formel

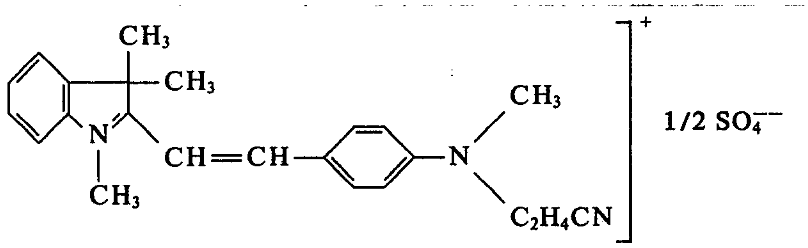

darstellt. Der Farbstoff färbt Polyacrylnitril gelbstichig rot (C. I. Hue Indication Chart Nr. 49).

Beispiel 22

235 g 1-Methyl-2-phenylindol-3-aldehyd und 203 g 5-Methoxy-1,3,3-trimethyl-2-methylen-indolin werden in einem Laborschaufeltrockner gemischt und bei 70° C mit einer Mischung aus 69 g 85%iger Phosphorsäure und 99 g 76%iger Polyphosphorsäure versetzt. Man vermahlt den Farbstoff bei 95° C

12 h im Vakuum der Wasserstrahlpumpe und erhält ihn als braunes Pulver. Er entspricht der Formel

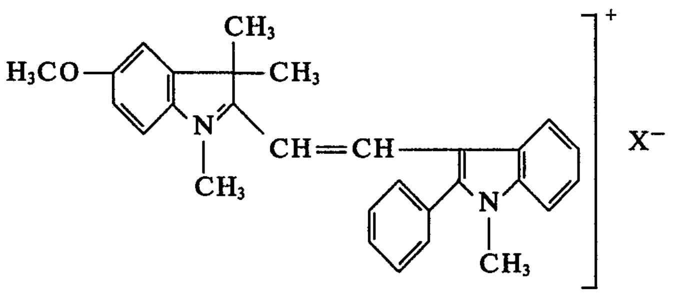

worin X⁻ ein Gemisch aus Ortho-, Pyro- und Polyphosphorsäureanion bedeutet. Der Farbstoff färbt Polyacrylnitril rotstichig orange (C. I. Hue Indication Chart Nr. 6).

Beispiel 23

1730 g 1,3,3-Trimethyl-2-methylen-indolin werden in einem Laboratoriumsschaufeltrockner von ca. 5 l Rauminhalt mit 1770 g 4-Diethylamino-benzaldehyd bei 50° C bis zur homogenen Schmelze verrührt und anschließend 970 g Amidosulfonsäure eingetragen. Nach 35 min kristallisiert der Farbstoff. Man erwärmt noch 3 h im Schaufeltrockner bei 100° C und eine weitere Stunde im Vakuum der Wasserstrahlpumpe. Man erhält 4160 g des Farbstoffes der Formel

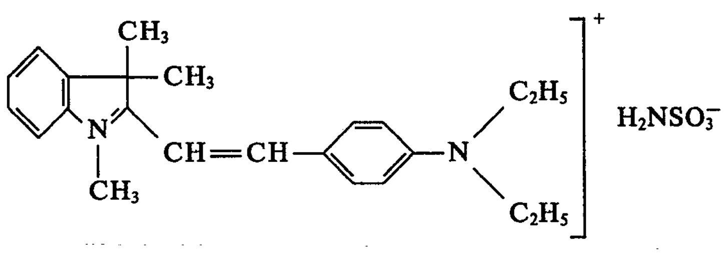

Beispiel 24

Man mischt 159 g 2-Methyl-indol-3-aldehyd mit 173 g 1,3,3-Trimethyl-2-methylen-indolin in einem Laborschaufeltrockner und gibt dann 105 g konz. Salzsäure zu. Man erwärmt auf 95° C, wobei die Schmelze nach wenigen Minuten kristallisiert. Man rührt bei 95° C über Nacht im Vakuum der Wasserstrahlpumpe, wobei der Farbstoff der Formel

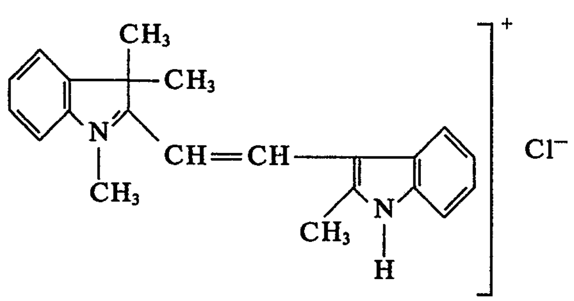

zu einem rotbraunen Pulver vermahlen wird. Er färbt sauer modifizierte Synthesefasern gelbstichig orange (C. I. Hue Indication Chart Nr. 4).

Beispiel 25

415 g 1,3,3-Trimethyl-2-methylen-indolin-$\omega$-aldehyd und 346 g 1,3,3-Trimethyl-2-methylen-indolin werden in einem Schaufeltrockner gemischt und dann mit 196 g Amidosulfonsäure versetzt. Die Schmelze wird auf 95° C erhitzt und bei dieser Temperatur im Vakuum der Wasserstrahlpumpe über

Nacht vermahlen. Das erhaltene blaurote Pulver enthält den Farbstoff der Formel

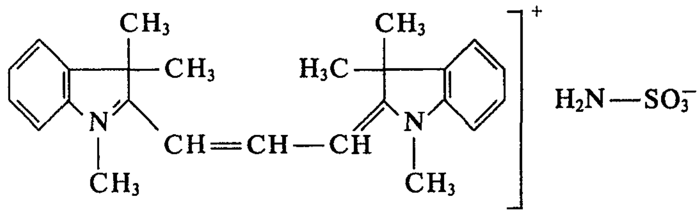

der Papier blaustichig rot anfärbt (C. I. Hue Indication Chart Nr. 51).

Beispiel 26

In einem Laboratoriumsschaufeltrockner mischt man bei Raumtemperatur 505 g N-Methyl-4-ethoxy-diphenylamin-4′-aldehyd, 350 g 1,3,3-Trimethyl-2-methylen-indolin, 280 ml Toluol und 1 kg wasserfreies Natriumsulfat. Dann werden binnen 20 min 196 g konzentrierte Schwefelsäure in dünnem Strahl zugesetzt und eingerührt. Man rührt 12 h bei 100°, destilliert dann unter vermindertem Druck das Toluol ab und mahlt weitere 12 h im Vakuum einer Wasserstrahlpumpe bei 85°. Man erhält den Farbstoff der Formel

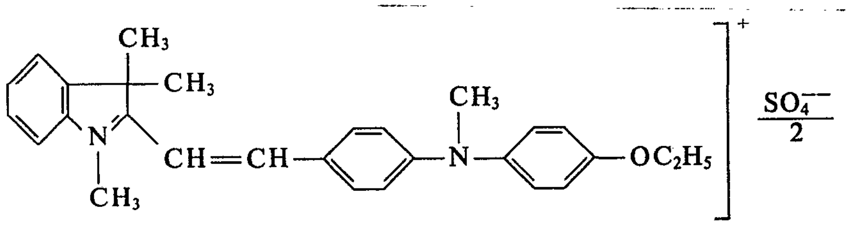

in Form eines feinen Pulvers. Er färbt Polyacrylnitril rotstichig violett (C. I. Hue Indication Chart Nr. 10).

Beispiel 27

In einem Laboratoriumsschaufeltrockner mischt man 475 g N-Methyl-4-ethoxy-diphenylamin-4′-aldehyd, 467 g 1,3,3-Trimethyl-5-carbomethoxy-2-methylenindolin, 300 ml Toluol, 1 kg wasserfreies Natriumsulfat und 30 g eines Polyglykolethers aus Oleylalkohol und Ethylenoxid, erwärmt die Mischung auf 70° und rührt dann 410 g 85%ige Phosphorsäure ein. Dann rührt man 1/2 h bei 95° und 1,5 h bei 100° und destilliert anschließend bei dieser Temperatur unter vermindertem Druck das Toluol ab. Nach Mahlen bei 100° im Vakuum der Wasserstrahlpumpe über Nacht wird der Farbstoff der Formel

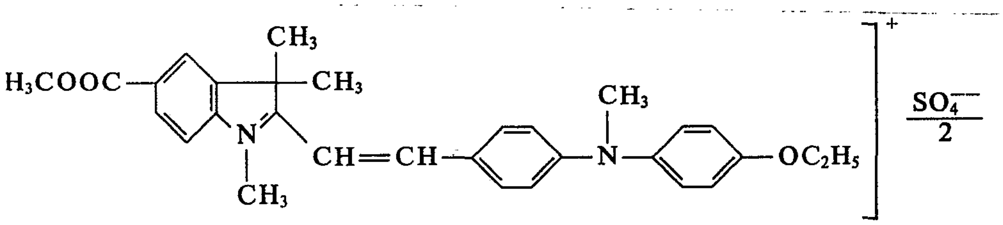

als feines Pulver erhalten. Er färbt Polyacrylnitril blaustichig violett (Hue Indication Chart Nr. 12).

**Patentansprüche**

1. Verfahren zur Herstellung von kationischen Methinfarbstoffen der allgemeinen Formel

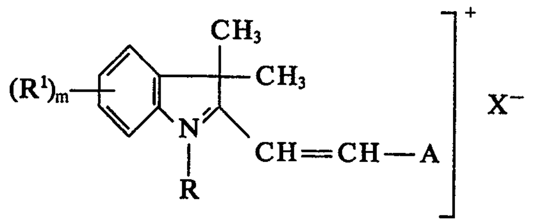

in welcher

| | |
|---|---|
| R | für einen gegebenenfalls durch Hydroxy, Alkoxy mit 1 bis 4 C-Atomen, Acyloxy, Halogen, Cyan, Carboxy, $C_1$- bis $C_4$-Carbalkoxy, Carbonamido oder Acetyl substituierten Alkylrest mit 1 bis 4 C-Atomen, |
| $R^1$ | für Wasserstoff, Alkyl mit 1 bis 4 C-Atomen, Halogen, Alkoxy mit 1 bis 4 C-Atomen, Hydroxyalkoxy mit 2 bis 4 C-Atomen, einen gegebenenfalls durch Halogen, $C_1$- bis $C_4$-Alkyl oder $C_1$- bis $C_4$-Alkoxy substituierten Phenoxy-, Benzyloxy- oder Benzyl-Rest, Carboxyl, einen Carbonsäurealkylester mit 1 bis 4 C-Atomen, eine gegebenenfalls durch 1 oder 2 $C_1$- bis $C_4$-Alkylreste substituierte Carbonamidgruppe, eine gegebenenfalls durch 1 oder 2 $C_1$- bis $C_4$-Alkylreste substituierte Sulfonamidgruppe, Alkylsulfonyl mit 1 bis 4 C-Atomen, Phenylsulfonyl, eine Cyan-, Trifluormethyl-, Acetyl- oder Benzoylgruppe, |
| A | für einen Rest der Formel |

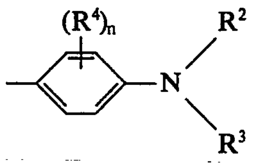

in welcher

| | |
|---|---|
| $R^2$ und $R^3$ | unabhängig voneinander für einen gegebenenfalls durch Hydroxy, $C_1$- bis $C_4$-Alkoxy, Halogen, Cyan, Phenyl, Carbalkoxy mit 1 bis 4 C-Atomen, Carbonamido, Acyloxy, Benzyloxy, Sulfonamido oder Acylamino substituierten Alkylrest mit 1 bis 4 C-Atomen stehen, |
| $R^2$ | zusätzlich für einen gegebenenfalls durch Halogen, $C_1$- bis $C_4$-Alkyl oder $C_1$- bis $C_4$-Alkoxy substituierten Phenyl- oder Benzylrest steht oder mit dem benachbarten C-Atom des Benzolringes einen teilhydrierten N- und gegebenenfalls O-haltigen 5- oder 6-Ring bilden kann, |
| $R^4$ | Wasserstoff, einen Alkylrest mit 1 bis 4 C-Atomen, einen Alkoxyrest mit 1 bis 4 C-Atomen oder Halogen bedeutet, |

oder einen Rest der Formel

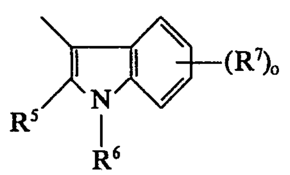

in welcher

| | |
|---|---|
| $R^5$ | für einen Alkylrest mit 1 bis 4 C-Atomen, einen gegebenenfalls durch Halogen, $C_1$- bis $C_4$-Alkyl oder $C_1$- bis $C_4$-Alkoxy substituierten Phenylrest oder einen Carbalkoxyrest mit 1 bis 4 C-Atomen, |
| $R^6$ | für Wasserstoff, einen gegebenenfalls durch Hydroxy, Halogen, Alkoxy mit 1 bis 4 C-Atomen, Cyan oder Acyloxy substituierten Alkylrest mit 1 bis 4 C-Atomen, |
| $R^7$ | für Wasserstoff, Halogen, $C_1$- bis $C_4$-Alkyl, $C_1$- bis $C_4$-Alkoxy, Carbalkoxy mit 1 bis 4 C-Atomen, $C_1$- bis $C_4$-Alkylsulfonyl, Phenylsulfonyl, Acetyl oder Benzoyl stehen, |

oder für einen Rest der Formel

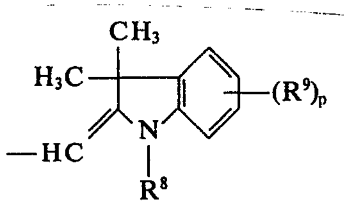

stehen, in welcher

$R^8$ und $R^9$ unabhängig voneinander die gleiche Bedeutung wie R und $R^1$ haben,

in welcher

X für den Rest einer anorganischen Säure steht,

und in welcher die Indizes

m, n, o und p unabhängig voneinander 1 bis 4 bedeuten,

durch Kondensation einer Verbindung der Formel

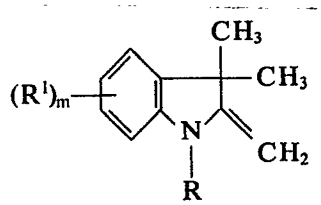

worin

R, $R^1$ und m die oben angegebene Bedeutung haben,

mit einer Verbindung der Formel

A—CHO

in welcher

A die oben angegebene Bedeutung besitzt,

und Säuren, dadurch gekennzeichnet, daß man die Kondensation mit 1 bis 5 Äquivalenten einer anorganischen Säure in Gegenwart von 0—30 Gew.-% eines organischen Lösungsmittels und von 0—15 Gew.-% Wasser (beide Gewichtsangaben bezogen auf das Gesamtgewicht der organischen Ausgangskomponenten) durchführt.

2. Verfahren gemäß Anspruch 1 zur Herstellung von kationischen Methinfarbstoffen der allgemeinen Formel

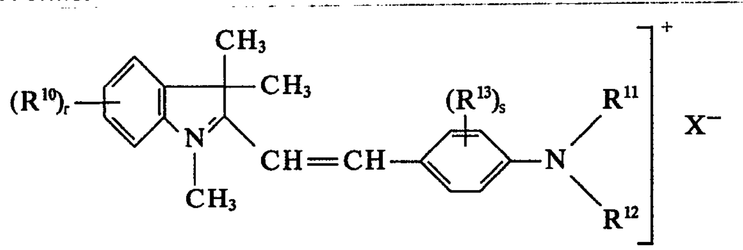

in welcher

$R^{10}$ für Wasserstoff, Chlor, Methyl, Methoxy, Ethoxy oder Carbomethoxy,
$R^{11}$ und $R^{12}$ unabhängig voneinander für einen gegebenenfalls durch Hydroxy, Methoxy, Ethoxy, Chlor, Cyan, Phenyl oder Acyloxy substituierten Alkylrest mit 1 bis 4 C-Atomen stehen und

| | |
|---|---|
| $R^{11}$ | zusätzlich einen gegebenenfalls durch Chlor, Methyl oder Methoxy substituierten Phenylrest bezeichnet oder mit dem benachbarten C-Atom des Benzolringes einen teilhydrierten N- und gegebenenfalls O-haltigen 5- oder 6-Ring bilden kann, |
| $R^{13}$ | Wasserstoff, Methyl, Chlor, Methoxy oder Ethoxy, |
| r und s | 1 oder 2 bedeuten, und |
| X | die gleiche Bedeutung wie in Anspruch 1 hat, |

durch Kondensation einer Verbindung der Formel

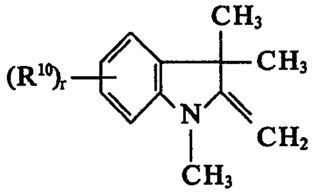

worin

| | |
|---|---|
| $R^{10}$ und r | die oben angegebene Bedeutung haben, |

mit äquimolekularen Mengen einer Verbindung der Formel

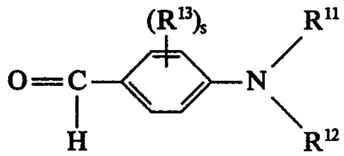

worin

| | |
|---|---|
| $R^{11}$, $R^{12}$, $R^{13}$ und s | die obengenannte Bedeutung haben, |

und mit 1 bis 5 Äquivalenten einer anorganischen Säure.

3. Verfahren gemäß Anspruch 1, dadurch gekennzeichnet, daß man die Kondensation in Abwesenheit eines organischen Lösungsmittels durchführt.

4. Verfahren gemäß Anspruch 1, dadurch gekennzeichnet, daß man die Kondensation in einem Festphasenreaktor mit rotierenden Einbauten durchführt.

5. Verfahren gemäß Anspruch 4, dadurch gekennzeichnet, daß man die Kondensation in Reaktionsschnecken, Knetapparaturen, Schaufeltrocknern oder Allphasenreaktoren durchführt.

6. Verfahren gemäß Anspruch 1, dadurch gekennzeichnet, daß man als anorganische Säure die Säuren des Phosphors einsetzt.

7. Verfahren gemäß Anspruch 1, dadurch gekennzeichnet, daß man zur Vermeidung von Krustenbildung an der Reaktorwand zu Beginn der Reaktion anorganische Salze zusetzt.

8. Verfahren gemäß Anspruch 1, dadurch gekennzeichnet, daß man anstelle der anorganischen Säure die sauren Salze mehrbasischer Säuren verwendet.

9. Verfahren gemäß Anspruch 1, dadurch gekennzeichnet, daß man zur Herstellung von verkaufsfertigen Farbstoffeinstellungen zu der in einem Schaufeltrockner durchgeführten Umsetzung vor, während oder nach der Reaktion Stellmittel zusetzt.

10. Verwendung der nach Anspruch 1 hergestellten Farbstoffsalze zum Färben von tannierter Baumwolle, sauer modifizierten Polyamid- und Polyesterfasern, von holzschliffhaltigem Papier, von Leder sowie zur Herstellung von Kugelschreiberpasten, Tinten und Stempelfarben, insbesondere zum Färben von Materialien aus Polyacrylnitril.

## Claims

1. Process for the preparation of cationic methine dyestuffs of the general formula

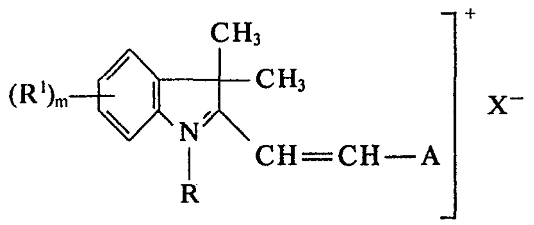

in which

R represents an alkyl radical which has 1 to 4 C atoms and is optionally substituted by hydroxyl, alkoxy having 1 to 4 C atoms, acyloxy, halogen, cyano, carboxyl, $C_1$ to $C_4$-carboalkoxy, carbonamido or acetyl,

$R^1$ represents hydrogen, alkyl having 1 to 4 C atoms, halogen, alkoxy having 1 to 4 C atoms, hydroxyalkoxy having 2 to 4 C atoms, a phenoxy, benzyloxy or benzyl radical which is optionally substituted by halogen, $C_1$ to $C_4$-alkyl or $C_1$ to $C_4$-alkoxy, carboxyl, a carboxylic acid alkyl ester which has 1 to 4 C atoms, a carbonamide group which is optionally substituted by 1 or 2 $C_1$ to $C_4$-alkyl radicals, a sulphonamide group which is optionally substituted by 1 or 2 $C_1$ to $C_4$-alkyl radicals, alkylsulphonyl having 1 to 4 C atoms, phenylsulphonyl or a cyano, trifluoromethyl, acetyl or benzoyl group,

A represents a radical of the formula

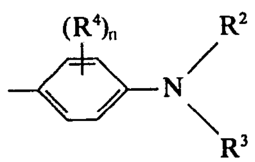

in which

$R^2$ and $R^3$ independently of one another represent an alkyl radical which has 1 to 4 C atoms and is optionally substituted by hydroxyl, $C_1$ to $C_4$-alkoxy, halogen, cyano, phenyl, carboalkoxy having 1 to 4 C atoms, cabonamido, acyloxy, benzyloxy, sulphonamido or acylamino,

$R^2$ additionally represents a phenyl or benzyl radical which is optionally substituted by halogen, $C_1$ to $C_4$-alkyl or $C_1$ to $C_4$-alkoxy, or, together with the adjacent C atom of the benzene ring, can form a partially hydrogenated 5-membered or 6-membered ring which contains N and optionally contains O, and

$R^4$ denotes hydrogen, an alkyl radical having 1 to 4 C atoms, an alkoxy radical having 1 to 4 C atoms or halogen,

or A represents a radical of the formula

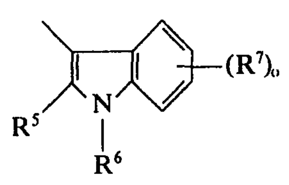

in which

$R^5$ represents an alkyl radical having 1 to 4 C atoms, a phenyl radical which is optionally substituted by halogen, $C_1$ to $C_4$-alkyl or $C_1$ to $C_4$-alkoxy, or a carboalkoxy radical having 1 to 4 C atoms,

$R^6$ represents hydrogen, an alkyl radical which has 1 to 4 C atoms and is optionally substituted by hydroxyl, halogen, alkoxy having 1 to 4 C atoms, cyano or acyloxy, and

$R^7$ represents hydrogen, halogen, $C_1$ to $C_4$-alkyl, $C_1$ to $C_4$-alkoxy, carboalkoxy having 1 to 4 C atoms, $C_1$ to $C_4$-alkylsulphonyl, phenylsulphonyl, acetyl or benzoyl,

or A represents a radical of the formula

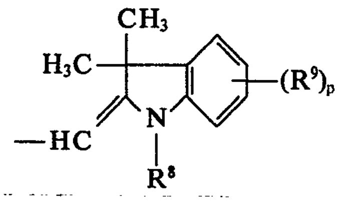

in which

$R^8$ and $R^9$ independently of one another have the same meaning as R and $R^1$,

in which

X represents the radical of an inorganic acid

and in which

the indices m, n, o and p independently of one another denote 1 to 4,

by subjecting a compound of the formula

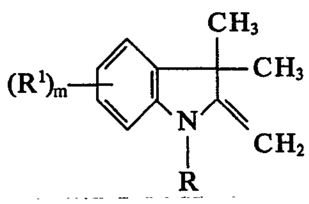

wherein

R, $R^1$ and m have the meaning indicated above,

to a condensation reaction with a compound of the formula

A—CHO

in which

A has the meaning indicated above,

and with acids, characterised in that the condensation reaction is carried out using 1 to 5 equivalents of an inorganic acid in the presence of 0—30% by weight of an organic solvent and 0—15% by weight of water (both the weights quoted relating to the total weight of the organic starting components).

2. Process according to Claim 1 for the preparation of cationic methine dyestuffs of the general formula

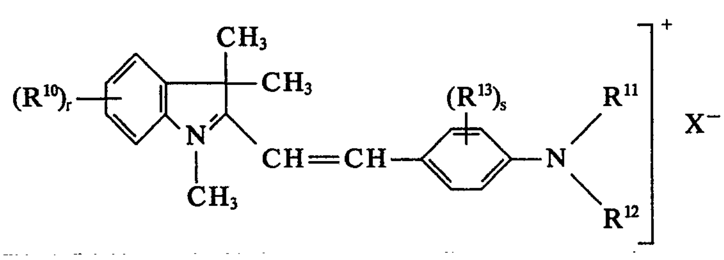

in which

$R^{10}$ represents hydrogen, chlorine, methyl, methoxy, ethoxy or carbomethoxy,
$R^{11}$ and $R^{12}$ independently of one another represent an alkyl radical which has 1 to 4 C atoms and is optionally substituted by hydroxyl, methoxy, ethoxy, chlorine, cyano, phenyl or acyloxy, and

| | |
|---|---|
| $R^{11}$ | additionally designates a phenyl radical which is optionally substituted by chlorine, methyl or methoxy, or, together with the adjacent C atom of the benzene ring, can form a 5-membered or 6-membered partially hydrogenated ring which contains N and optionally contains O, |
| $R^{13}$ | denotes hydrogen, methyl, chlorine, methoxy or ethoxy, |
| r and s | denote 1 or 2 and |
| X | has the same meaning as in Claim 1, |

by subjecting a compound of the formula

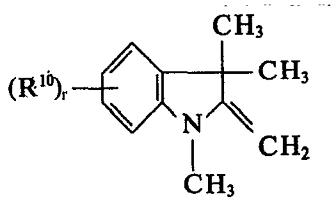

wherein

$R^{10}$ and r have the meaning indicated above,

to a condensation reaction with equimolecular quantities of a compound of the formula

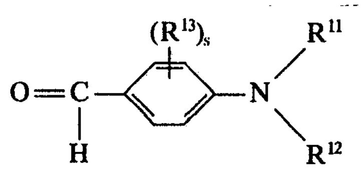

wherein

$R^{11}$, $R^{12}$, $R^{13}$ and s have the abovementioned meaning,

and with 1 to 5 equivalents of an inorganic acid.

3. Process according to Claim 1, characterised in that the condensation reaction is carried out in the absence of an organic solvent.

4. Process according to Claim 1, characterised in that the condensation reaction is carried out in a solid phase reactor equipped with rotating internal fitments.

5. Process according to Claim 4, characterised in that the condensation reaction is carried out in screw reactors, kneading apparatus, paddle driers or all-phase reactors.

6. Process according to Claim 1, characterised in that the acids of phosphorus are employed as the inorganic acid.

7. Process according to Claim 1, characterised in that inorganic salts are added at the start of the reaction in order to avoid the formation of incrustations on the reactor wall.

8. Process according to Claim 1, characterised in that the acid salts of polybasic acids are used instead of the inorganic acid.

9. Process according to Claim 1, characterised in that, before, during or after the reaction, standardising agents are added to the reaction, carried out in a paddle drier, in order to prepare standardised dyestuffs ready for sale.

10. Use of the dyestuff salts prepared in accordance with Claim 1 for dyeing cotton which has been mordanted with tannic acid, acid-modified polyamide and polyester fibres, paper containing mechanical wood pulp, and leather, and for the production of ball-point pen pastes, inks and stamp pad inks, and especially for dyeing materials composed of polyacrylonitrile.

**Revendications**

1. Procédé de fabrication de colorants méthiniques cationiques de formule générale:

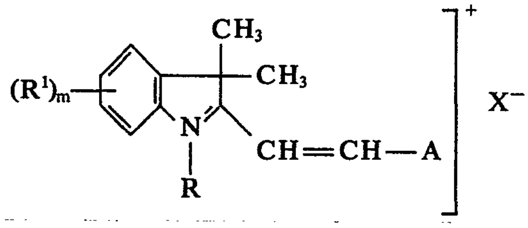

dans laquelle

R représente un radical alcoyle ayant 1 à 4 atomes de carbone éventuellement substitué par hydroxy, alcoxy ayant 1 à 4 atomes de carbone, acyloxy, halogène, cyano, carboxy, carbalcoxy en $C_1-C_4$, carbonamide ou acétyle,

$R^1$ de l'hydrogène, alcoyle ayant 1 à 4 atomes de carbone, halogène, alcoxy ayant 1 à 4 atomes de carbone, hydroxylalcoxy ayant 2 à 4 atomes de carbone, un radical phénoxy, benzyloxy ou benzyle éventuellement substitué par de l'halogène, alcoyle en $C_1-C_4$ ou alcoxy en $C_1-C_4$, carboxyle, un ester alcoylé d'acide carboxylique ayant 1 à 4 atomes de carbone, un groupe carbonamide éventuellement substitué par 1 ou 2 radicaux alcoyle en $C_1-C_4$, un groupe sulfonamide éventuellement substitué par 1 ou 2 radicaux alcoyle en $C_1-C_4$, alcoylsulfonyle ayant 1 à 4 atomes de carbone, phénylsulfonyle, un groupe cyano, trifluorométhyle, acétyle ou benzoyle,

A un radical de formule:

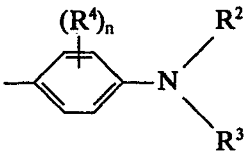

dans laquelle

$R^2$ et $R^3$ indépendamment l'un de l'autre représentent un radical alcoyle ayant 1 à 4 atomes de carbone éventuellement substitué par hydroxy, alcoxy en $C_1-C_4$, halogène, cyano, phényle, carbalcoxy ayant 1 à 4 atomes de carbone, carbonamide, acyloxy, benzyloxy, sulfonamido ou acylamino,

$R^2$ représentant en plus un radical phényle ou benzyle éventuellement substitué par de l'halogène, alcoyle en $C_1-C_4$ ou alcoxy en $C_1-C_4$, ou pouvant former avec l'atome de carbone voisin du noyau benzénique un noyau à 5 ou 6 chaînons contenant N et éventuellement O, partiellement hydrogéné,

$R^4$ de l'hydrogène, un radical alcoyle ayant 1 à 4 atomes de carbone, un radical alcoxy ayant 1 à 4 atomes de carbone ou de l'halogène, ou un radical de formule:

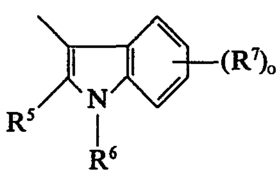

dans laquelle

$R^5$ représente un radical alcoyle ayant 1 à 4 atomes de carbone, un radical phényle éventuellement substitué par de l'halogène, alcoyle en $C_1-C_4$ ou alcoxy en $C_1-C_4$, ou un radical carbalcoxy ayant 1 à 4 atomes de carbone,

$R^6$ de l'hydrogène, un radical alcoyle ayant 1 à 4 atomes de carbone éventuellement substitué par hydroxy, halogène, alcoxy ayant 1 à 4 atomes de carbone, cyano ou acyloxy,

$R^7$ de l'hydrogène, halogène, alcoyle en $C_1-C_4$, alcoxy en $C_1-C_4$, carbalcoxy ayant 1 à 4 atomes de carbone, alcoylsulfonyle en $C_1-C_4$, phénylsulfonyle, acétyle ou benzoyle,

ou un radical de formule:

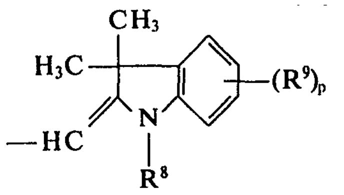

dans laquelle

$R^8$ et $R^9$ indépendamment l'un de l'autre ont la même signification que R et $R^1$,

dans laquelle

X représente le radical d'un acide minéral,

et dans laquelle les indices

m, n, o et p indépendamment les uns des autres signifient 1 à 4,

par condensation d'un composé de formule:

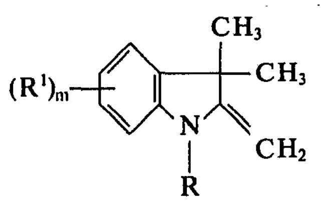

dans laquelle

R, $R^1$ et m ont la signification indiquée plus haut,

avec un composé de formule:

A—CHO

dans laquelle

A possède la signification indiquée plus haut,

et d'acides, caractérisé en ce qu'on effectue la condensation avec 1 à 5 équivalents d'un acide minéral en présence de 0—30% en poids d'un solvant organique et de 0—15% en poids d'eau (les deux indications de poids étant rapportées au poids total des composants organiques de départ).

2. Procédé selon la revendication 1 pour la fabrication de colorants méthiniques cationiques de formule générale:

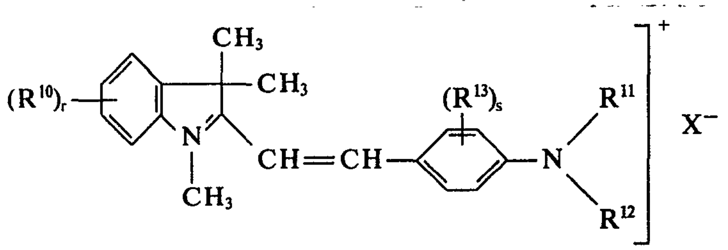

dans laquelle

$R^{10}$ représente de l'hydrogène, chlore, méthyle, méthoxy, éthoxy ou carbométhoxy,
$R^{11}$ et $R^{12}$ indépendamment l'un de l'autre un radical alcoyle ayant 1 à 4 atomes de carbone éventuellement substitué par hydroxy, méthoxy, éthoxy, chlore, cyano, phényle ou acyloxy et
$R^{11}$ représentant en plus un radical phényle éventuellement substitué par du chlore, méthyle

|  |  |
|---|---|
|  | ou méthoxy, ou pouvant former avec l'atome de carbone voisin du noyau benzénique un noyau à 5 ou 6 chaînons contenant N et éventuellement O, partiellement hydrogéné, |
| $R^{13}$ | de l'hydrogène, méthyle, chlore, méthoxy ou éthoxy, |
| r et s | signifient 1 ou 2, et |
| X | ayant la même signification qu'à la revendication 1, |

par condensation d'un composé de formule:

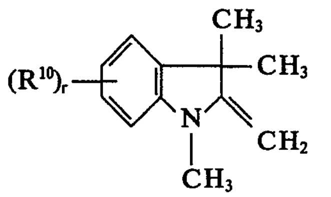

dans laquelle

$R^{10}$ et r ont la signification indiquée plus haut,

avec des quantités équimoléculaires d'un composé de formule:

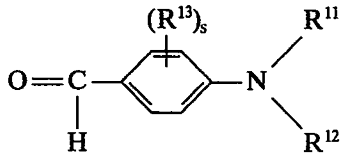

dans laquelle

$R^{11}$, $R^{12}$, $R^{13}$ et s ont la signification citée plus haut,

et avec 1 à 5 équivalents d'un acide minéral.

3. Procédé selon la revendication 1, caractérisé en ce qu'on exécute la condensation en l'absence d'un solvant organique.

4. Procédé selon la revendication 1, caractérisé en ce qu'on exécute la condensation dans un réacteur pour phases solides avec éléments rotatifs incorporés.

5. Procédé selon la revendication 4, caractérisé en ce qu'on exécute la condensation dans des vis sans fin de réaction, des appareils malaxeurs, des séchoirs à ailettes ou des réacteurs pour toutes phases.

6. Procédé selon la revendication 1, caractérisé en ce qu'on utilise en tant qu'acide minéral les acides du phosphore.

7. Procédé selon la revendication 1, caractérisé en ce que pour éviter la formation d'incrustations sur la paroi du réacteur, on ajoute au début de la réaction des sels minéraux.

8. Procédé selon la revendication 1, caractérisé en ce qu'au lieu de l'acide minéral on utilise les sels acides d'acides polybasiques.

9. Procédé selon la revendication 1, caractérisé en ce que pour la fabrication de formulations de colorants prêtes à la commercialisation on ajoute, dans la réaction exécutée dans un séchoir à ailettes, un agent adultérant avant, pendant ou après la réaction.

10. Utilisation des sels de colorants fabriqués selon la revendication 1, pour la teinture du coton tanné, de fibres de polyamides et de polyesters modifiées à l'acide, de papier renfermant de la sciure de bois, du cuir de même que pour la fabrication de pâtes pour stylos à bille, d'encres et de couleurs à tamponner, en particulier pour la teinture de matériaux en polyacrylonitrile.